# EUROPÄISCHE PATENTSCHRIFT

(11) **EP 3 856 515 B1**
(45) Veröffentlichungstag und Bekanntmachung des Hinweises auf die Patenterteilung: **05.07.2023**
(21) Anmeldenummer: 19772679.7
(22) Anmeldetag: 16.09.2019
(51) Int. Cl.: B32B 27/08, B32B 27/30, B32B 27/32, B32B 27/36

(54) **SCHICHTENANORDNUNG FÜR VERPACKUNGEN**
LAYER ARRANGEMENT FOR PACKAGING
AGENCEMENT DE COUCHES POUR L'EMBALLAGE

(30) Priorität: 24.09.2018 DE 102018123453
(43) Veröffentlichungstag der Anmeldung: 04.08.2021
(73) Patentinhaber: LEIPA Georg Leinfelder GmbH, 86529 Schrobenhausen (DE)
(72) Erfinder: STEINER, Ewald, 6341 Ebbs - Eichelwang (AT); JÄSCHKE, Tilo, 92339 Beilngries (DE); MATTHIAS, Haux, 87439 Kempten (DE); SCHÜRMANN, Christian, 58239 Schwerte (DE)
(74) Vertreter: Wittmann, Ernst-Ulrich
(86) Internationale Anmeldenummer: PCT/EP2019/074664
(87) Internationale Veröffentlichungsnummer: WO 2020/064393

(56) Entgegenhaltungen:
- JP-A- 2002 187 241
- KR-A- 20100 104 716
- US-A- 3 114 643
- US-A1- 2009 286 054
- US-B1- 6 391 402

## Beschreibung

Die vorliegende Erfindung betrifft eine Schichtenanordnung, sowie eine Verpackung für ein Füllgut, insbesondere für Lebensmittel aufweisend eine erfindungsgemäße Schichtenanordnung, weiterhin ein Verfahren zur Herstellung der erfindungsgemäßen Schichtenanordnung oder zur Herstellung der erfindungsgemäßen Verpackung und ferner die Verwendung einer erfindungsgemäßen Schichtenanordnung zur Herstellung einer Verpackung für ein Füllgut.

Schichtenanordnungen, insbesondere Folienanordnungen, die mit einer abziehbar befestigten abschließenden Hüllschicht als Verpackung ausgebildet sind, sind sowohl für den Lebensmittelbereich als auch für den Nicht-Lebensmittelbereich im Stand der Technik bspw. für Verpackungen für frische Lebensmittel, wie Wurst-, Fleisch-, Fisch-, Huhn- oder Käsegüter bekannt. Dabei werden üblicherweise relativ harte, zu Unterschalen geformte Folien aus Kunststoff genutzt, die mit einem Produkt befüllt werden und auf die nach der Befüllung eine Hüllschicht in Form einer Versiegelungsfolie angeordnet wird.

Bei Verwendung eines Papier-Kunststoffverbunds (Trägerschicht-Deckschicht-Verbunds) stellt sich für den Konsumenten nach der Verwendung das Problem eine solche Verpackung entsorgen zu müssen, welche als Verbund weder dem Kunststoff- noch dem Papierkreislauf nach vielerorts geltenden Regelungen zugeführt werden kann.

Meist ist daher für den Verbund nur eine thermische Verwertung mit entsprechenden erheblich hohen, sich akkumulierenden Gebühren möglich.

Der momentane Stand der Technik ist, dass entweder bei einer geringen Kunststoffkonzentration (in Deutschland aktuell 5%, in Österreich 20%) dieser Verpackung als Papier deklariert werden darf und auch als solches entsorgt werden kann. Dies liegt insbesondere daran, dass bei üblichen Verbunderzeugungsverfahren wie der Laminierung mittels (Kleber-)Kaschierung und/oder Extrusion das Kunststoffmaterial der Deckschicht den Papieranteil der Trägerschicht weitflächig durchdringt und keine klare Schichtentrennung vorhanden ist. Dies wirkt sich bei einer nachgeschalteten Wiederaufbereitung der Werkstoffe mittels Recycling besonders nachteilig aus.

Ein Nachteil der derzeit am Markt befindlichen Lösung zur Verwertung gebrauchter im Stand der Technik bekannter Schichtenanordnungen aus Trägerschicht und Deckschicht bzw. diese Anordnung aufweisende Verpackungen ist deren nicht ausreichende Trennung ohne Papierfaserverunreiniqunq von Kunststoff und/oder Papier.

JP 2002 187241A und KR 2010 0104716 A betreffen recyclingfreundliche Verpackungsbehälter für Lebensmittel.

Aufgabe der vorliegenden Erfindung ist es, die im Stand der Technik bekannten Nachteile wenigstens teilweise zu überwinden. Die vorstehende Aufgabe wird durch eine erfindungsgemäße Schichtenanordnung gemäß Anspruch 1 gelöst. Bevorzugte Ausgestaltungsformen der erfindungsgemäßen Schichtenanordnung sind Gegenstand der Unteransprüche.

Die erfindungsgemäße Schichtenanordnung weist auf:
- eine Trägerschicht, die tiefziehfähig ausgebildet ist, aufweisend eine Oberseite und eine Unterseite;
- eine Deckschicht, die tiefziehfähig ausgebildet ist, aufweisend eine Oberweite und eine Unterseite, wobei sich die Deckschicht im Wesentlichen über die gesamte Oberseite und/oder Unterseite der Trägerschicht erstreckt, zumindest eine Trennschicht zwischen der Trägerschicht und der Deckschicht angeordnet ist, welche sich im Wesentlichen über die gesamte Fläche zwischen der Trägerschicht und der Deckschicht wobei die Trägerschicht gegenüber der Deckschicht im Bereich der Trennschicht mit einer ersten Peelkraft von 0,5 - 6 N/15mm bevorzugt von 1 - 4 N/15mm, und besonders bevorzugt von 1,5 - 3 N/15mm getrennt werden kann dadurch gekennzeichnet, dass die Trennschicht tiefziehfähig ausgebildet ist und Materialien umfasst, die zumindest ein Bindemittel, ausgewählt aus einer Gruppe bestehend aus ersten Additiven, wobei die ersten Additiven Nitrocellulose, Carboxymethylcellulose (CMC) und Stärke und/oder zumindest einem Derivat von den vorgenannten sind und zumindest ein Trennmittel aufweist, ausgewählt aus einer Gruppe bestehend aus zweiten Additiven mit einer Schmelztemperatur von 40 - 250°C, insbesondere anorganischen Additiven, wie Silikone und/oder aus natürlichen, synthetischen und/oder teilsynthetischen hochviskosen Wachsen oder wachsähnlichen Substanzen und/oder zumindest einem Derivat von den vorgenannten.

Unter "Peelkraft" im Sinne der vorliegenden Erfindung soll jener Betrag der Kraft verstanden werden, der zum Trennen/Lösen/Peelen zweier Schichten einer Schichtenanordnung benötigt wird, gemessen mit dem T-Peeltest, 90° in Anlehnung an DIN 55529.

Durch das erfindungsgemäße Anordnen einer Trennschicht zwischen der Trägerschicht und der Deckschicht lässt sich die Trägerschicht im Bereich der Deckschicht ausreichend insbesondere im Wesentlichen rückstandsfrei von der Deckschicht trennen, so dass die einzelnen Rohstoffphasen der getrennten Schichten vorteilhaft einer sinnvollen rohstoffbezogenen Entsorgung/Wiederverwendung/Verwertung zugeführt werden können. Dadurch reduzieren sich positiv die Verfahrensschritte und die Verfahrenskomplexität der Entsorgung / Wiederverwendung / Verwertung der Rohstoffe der erfindungsgemäßen Schichtenanordnung und es wird umweltfreundlich weniger Energie und Betriebsflüssigkeiten zum Trennen der Rohstoffe benötigt im Vergleich zu der Entsorgung/Wiederverwendung/Verwertung der Rohstoffe von Stand der Technik Schichtenanordnungen, deren Träger- und Deckschicht sich nicht sowohl derart einfach als auch ausreichend insbesondere im Wesentlichen rückstandsfrei trennen lassen. Zudem lässt sich mehr Papieranteil der Trägerschicht Wiederverwerten und bei ggf. vorhandener höherer Papierfaserqualität auch höherwertigen Wiederverwertungen, wie der Altpapierherstellung höherer Qualität zuleiten.

Die Trennschicht kann hierbei beim Vorgang der Trennung der Trägerschicht von der Deckschicht entweder auf der Trägerschicht oder auf der Deckschicht verbleiben, wobei sie bevorzugt auf der Deckschicht verbleibt. Auf welcher der beiden Grenzschichten die Trennschicht beim Trennvorgang verbleibt, ist durch Auswahl der eingesetzten Materialien für Trägerschicht, Trennschicht und/oder Deckschicht einstellbar und kann durch Zugabe entsprechender Zuschlagstoffe zur Trägerschicht, Trennschicht und/oder Deckschicht weiter in die eine oder andere Richtung begünstigt werden.

Im Falle des Verbleibens der Trennschicht auf der Deckschicht nach der Trennung der Trägerschicht von der Deckschicht im Bereich der Trennschicht ist unter "im Wesentlichen rückstandsfreiem Trennen" im Sinne der vorliegenden Erfindung zu verstehen, dass nach der Trennung keine oder nur geringe Stoffbestandteilen der Trägerschicht auf der Trennschicht der verbliebenen Trennschicht-Deckschicht-Anordnung zurückbleiben. Im Falle des Verbleibens der Trennschicht auf der Trägerschicht nach der Trennung der Trägerschicht von der Deckschicht im Bereich der Trennschicht ist unter "im Wesentlichen rückstandsfreien Trennen" im Sinne der vorliegenden Erfindung zu verstehen, dass nach der Trennung keine oder geringe Stoffbestandteilen der Deckschicht auf der Trennschicht der verbliebenen Trennschicht-Trägerschicht -Anordnung zurückbleiben.

Zusätzlich kann die Trennschicht derart gestaltet sein, dass nach Trennung der Trägerschicht von der Deckschicht unabhängig von dem Verbleib der Trennschicht auf entweder der Trägerschicht oder der Deckschicht, die Trennschicht von der noch anhaftenden Trägerschicht oder der Deckschicht nachträglich entfernt, insbesondere abgepeelt werden kann.

Dies ermöglicht eine noch bessere Trennung der Rohstoffphasen der Schichten und demnach eine noch bessere Entsorgung/Wiederverwendung/Verwertung der Rohstoffe der Schichten.

Gemäß einer weiteren Ausführungsform der erfindungsgemäßen Schichtenanordnung ist an einem randständigen Ende der Deckschicht zumindest eine Trennhilfe zum Trennen der Unterseite der Trennschicht gegenüber der Oberseite der Trägerschicht vorgesehen. Diese ist insbesondere als Trennlasche ausgebildet.

Als Trennhilfe kommen alle denkbaren Strukturen und deren Anordnungen in Frage, die im Stand der Technik bekannt sind und die Trennung der Trägerschicht gegenüber der Deckschicht im Bereich der Trennschicht ermöglichen, bspw. eine Trennlasche. Vorzugsweise ist wenigstens eine von solchen Stand der Technik Strukturen randständig an der Trägerschicht, der Trennschicht und/oder der Deckschicht vorhanden, vorzugsweise an der Deckschicht.

Die Trägerschicht, die Deckschicht und/oder die Trennschicht können jeweils einschichtig oder mehrschichtig ausgebildet sein.

Gemäß einer bevorzugten Ausführungsform der erfindungsgemäßen Schichtenanordnung sind die Trägerschicht und/oder die Deckschicht einschichtig oder mehrschichtig ausgebildet und die Trennschicht ist einschichtig ausgebildet.

Weiterhin können die Trägerschicht, die Deckschicht und/oder die Trennschicht einseitig oder beidseitig bedruckt sein.

Gemäß einer weiteren Ausführungsform der erfindungsgemäßen Schichtenanordnung ist die Trägerschicht tiefziehfähig ausgestaltet und besteht zu 40% - 100% oder 75% - 100%, bevorzugt von 50% - 80% oder 90% - 100% bezogen auf die Gesamtmasse der Trägerschicht aus natürlichem Faserstoff und der Rest besteht aus Hilfsstoffen.

Unter "natürlicher Faserstoff" im Sinne der vorliegenden Erfindung werden alle im Stand der Technik bekannten Arten von cellulosehaltigen Faserzellstoffen, insbesondere Holzstoffe und/oder Zellstoffe von beispielsweise Laub- und/oder Nadelbäumen aber auch von anderen holzigen und/oder krautigen Pflanzen mit unterschiedlichen Anteilen von Lang- und/oder Kurzfasern verstanden. Es kommen reine unbehandelte und/oder behandelte und/oder modifizierte Cellulosefasern, Altpapiercellulosefasern, Holzschliff, Linterszellstoffe und dergleichen in Betracht. Auch thermisch, enzymatisch oder mechanisch vorbehandelte cellulosehaltige Stoffe oder thermisch, enzymatisch und mechanisch variabel kombinierte vorbehandelte, cellulosehaltige Stoffe, und fibrillierend und/oder schneidend gemahlenes cellulosehaltiges Material mit unterschiedlichen Mahlgraden, sowie verschiedenster Dicke und Länge sind vom Begriff miterfasst.

Unter "Tiefziehen" im Sinne der vorliegenden Erfindung soll allgemein ein Verfahren zum Umformen von tiefziehfähigen Materialien verstanden werden, bei denen durch Zugdruckumformen ein einseitig offener Hohlkörper ohne beabsichtigte Änderung der Wanddicke erhalten wird. Insbesondere fällt hierunter als besondere Ausführungsform das Thermoformen, bei dem unter Zufuhr von Wärme das Zugdruckumformen ausgeführt wird.

"Tiefziehfähig" beschreibt hierbei die Eignung einer so bezeichneten Schicht zum Tiefziehen entsprechend der oben gegebenen Definition von "Tiefziehen", insbesondere hat eine so bezeichnete Schicht die Eignung zum "Thermoformen" entsprechend der oben gegebenen Definition von "Thermoformen", d.h. sie ist thermoformbar.

Gemäß einer weiteren Ausführungsform der erfindungsgemäßen Schichtenanordnung sind die Hilfsstoffe aus einer Gruppe ausgewählt, bestehend aus Füllstoffen und/oder Pigmenten und/oder organischen Additiven wie Nassfestmittel, Retentionsmittel, Bindemittel, Trennmittel, Dispergiermittel, Gleitmittel, Phasenvermittler, Formentnahmehilfsmittel, Mischungsverbesserer, UV-Stabilisatoren und Katalysatoren sowie Antioxidantien.

Gemäß einer weiteren Ausführungsform der erfindungsgemäßen Schichtenanordnung ist die Deckschicht tiefziehfähig ausgebildet und umfasst Materialen, die aus der Gruppe ausgewählt sind bestehend aus Polyethylen (PE), bspw. Polyethylen hoher Dichte (PE-HD oder HDPE), Polyethylen mittlerer Dichte (PE-MD oder MDPE), Polyethylen niedriger Dichte (PE-LD oder LDPE), sowie deren Copolymere, insbesondere Acrylsäure-Copolymere und Mischungen aus den vorgenannten.

Gemäß einer bevorzugten Ausführungsform der erfindungsgemäßen Schichtenanordnung ist die Deckschicht tiefziehfähig ausgebildet und umfasst Materialen, die aus der Gruppe ausgewählt sind bestehend aus Polyethylen (PE), insbesondere Polyethylen hoher Dichte (PE-HD oder HDPE), oder Polyethylen niedriger Dichte (PE-LD oder LDPE), sowie deren Copolymere und Mischungen aus den vorgenannten.
bspw. Polyethylen hoher Dichte (PE-HD oder HDPE), Polyethylen mittlerer Dichte (PE-MD oder MDPE), Polyethylen niedriger Dichte (PE-LD oder LDPE).

Gemäß der erfindungsgemäßen Schichtenanordnung ist die Trennschicht tiefziehfähig ausgebildet und umfasst Materialien, die zumindest ein Bindemittel, ausgewählt aus einer Gruppe bestehend aus ersten Additiven, wobei die ersten Additive Nitrocellulose, Carboxymethylcellulose (CMC) und Stärke, bspw. Maisstärke oder Weizenstärke und/oder zumindest einem Derivat von den vorgenannten sind und zumindest ein Trennmittel aufweist, ausgewählt aus einer Gruppe bestehend aus zweiten Additiven mit einer Schmelztemperatur von 40 - 250°C, bevorzugt 60 - 200°C oder 100 - 200°C und besonders bevorzugt von 110 - 160°C, insbesondere anorganischen Additiven, wie Silikone und/oder aus natürlichen, synthetischen und/oder teilsynthetischen hochviskosen Wachsen oder wachsähnlichen Substanzen und/oder zumindest einem Derivat von den vorgenannten.

Unter "Stärke" soll im Sinne der vorliegenden Erfindung jegliche native, modifizierte oder (teil-)abgebaute Stärke verstanden werden. Native Stärken können aus Amylose, Amylopektin oder deren Gemische bestehen. Bei modifizierter Stärke kann es sich um oxydierte Stärke, Stärkeester oder Stärkeether handeln. In Betracht kommt anionisch, kationisch, amphoter oder nicht ionisch modifizierte Stärke. Durch eine anteilige Hydrolyse kann das Molgewicht der Stärke verringert werden ((teil-)abgebaute Stärken). Als Abbauprodukte kommen Oligosaccharide oder Dextrine in Betracht. Die Stärke kann aus verschiedenen Quellen stammen, es kann sich z. B. um Getreide oder Wurzelstärke, bspw. Kartoffelstärke oder Tapiokastärke handeln, insbesondere z.B. Stärke aus Getreide, wie Mais, Wachsmais, Weizen, Reis, Gerste oder Hafer.

Es hat sich überraschenderweise gezeigt, dass bei einer solchen Trennschicht innerhalb einer erfindungsgemäßen tiefziehfähigen Schichtenanordnung die der Trennschicht zugewandte Seite der Trägerschicht im Wesentlichen flächig verbunden wird, jedoch wird die Haftung, die sich durch einen direkten Kontakt von faserstoff-, insbesondere papierhaltiger Trägerschicht und Deckschicht gemäß Stand der Technik ergibt, durch die Trennschicht signifikant verringert. Die Haftung basiert erfindungsgemäß hierbei ohne an die Theorie gebunden zu sein über im Wesentlichen reine Adhäsionskräfte nicht jedoch über kovalente Bindungen und/oder Makromolekülverschlaufungen. "Adhäsionskräfte" sind im Sinne der Erfindung solche molekularen Anziehungskräfte zwischen direkt aneinander angrenzenden Schichten (Grenzflächen) der Schichtenanordnung, bspw. Valenzkräfte, die diese beiden Grenzflächen an deren kontaktierten Oberflächen zusammenhalten.

Dadurch lässt sich die Deckschicht im Bereich der Trennschicht im Wesentlichen rückstandsfrei von der Trägerschicht trennen, so dass die einzelnen Rohstoffphasen der getrennten Schichten vorteilhaft einer sinnvollen rohstoffbezogenen Entsorgung/Wiederverwendung/Verwertung zugeführt werden können.

"Wachse" im Sinne der Erfindung sind Substanzen, die in Wasser unlöslich, jedoch in Ölen löslich sind und zur Bildung von wasserabweisenden Filmen befähigt sind. Weiterhin fallen Ester langkettiger Fettsäuren (mindestens 14 C-Atome) mit langkettigen Fettalkoholen (mindestens 14 C-Atome), wie Myristylmyristat (Cetiol MM) oder C16-C18 Triglyceride unter den Begriff der Wachse.

Im Sinne der Erfindung soll unter einem "hochviskosem Wachs", ein Wachs verstanden werden, welches bei Raumtemperatur (21 °C) fast fest ist, jedoch im Allgemeinen eine gewisse Verformbarkeit besitzt, insbesondere knetbar ist, sowie ausreichend stand- und stichfest, so dass es seine Form bei Raumtemperatur auch über die Zeit nicht wesentlich verändert. Solche Wachse weisen üblicherweise eine dynamische Viskosität im Bereich von 1000 bis 100.103 Pas bestimmt nach DIN EN ISO 3219:1994-10 auf.

Natürliche hochviskose Wachse sind tierischer oder pflanzlicher Herkunft. Typische Beispiele für natürliche hochviskose Wachse im Sinne der vorliegenden Lehre sind z.B. Shorea Stenoptera Butter (cegesoft SH), Sheabutter, Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachse, sowie Mikrowachse.

Typische Beispiele für synthetische hochviskose Wachse im Sinne der vorliegenden Lehre sind bspw. Polyethylenglycolwachse. Polyolefinwachse auch Polyalkylenwachse genannt, zählen gleichsam hierzu. Als erfindungsgemäße Polyolefinwachse kommen Homopolymerisate des Ethylens oder höhere 1-Olefine mit 3 bis 10 C-Atomen oder deren Copolymerisate untereinander in Frage, bevorzugt Ethylen, Propylen, iso-Buten, besonders bevorzugt Ethylen oder Propylen, ganz besonders bevorzugt Ethylen. Eine spezielle Gruppe der Polyolefinwachse, die Polyhalogenolefine, insbesondere Polytetrafluorethylen (PTFE) und/oder zumindest ein Derivat hiervon sind gleichsam bevorzugt. Bevorzugt weisen die Polyolefinwachse eine gewichtsmittlere Molmasse (Mw) zwischen 1 000 und 20 000 g/mol und eine zahlenmittlere Molmasse (Mn) zwischen 500 und 15 000 g/mol auf.

Typische Beispiele für teilsynthetische hochviskose Wachse im Sinne der vorliegenden Lehre sind bspw. Montanesterwachse, Sasolwachse, hydrierte Jojobawachse, Amide von Fett- und Wachssäuren, bspw. Stearinsäureamid, Behensäureamid, Erucasäureamid, Ölsäureamid, insbesondere Erucasäureamid.

Gemäß einer weiteren Ausführungsform der erfindungsgemäßen Schichtenanordnung ist das zumindest eine Bindemittel Nitrocellulose, Carboxymethylcellulose (CMC) oder Stärke, bspw. Maisstärke oder Weizenstärke und/oder zumindest ein Derivat von den vorgenannten und das zumindest eine Trennmittel ist ausgewählt aus einer Gruppe bestehend aus zweiten Additiven, wobei die zweiten Additive natürliche, synthetische und/oder teilsynthetische hochviskose Wachse und/oder zumindest ein Derivat von den vorgenannten sind.

Gemäß einer weiteren Ausführungsform der erfindungsgemäßen Schichtenanordnung ist das zumindest eine Bindemittel Nitrocellulose, Carboxymethylcellulose (CMC) oder Stärke, bspw. Maisstärke oder Weizenstärke und/oder zumindest ein Derivat von den vorgenannten und das zumindest eine Trennmittel ist ausgewählt aus einer Gruppe bestehend aus zweiten Additiven, wobei die zweiten Additive synthetische hochviskose Polyolefin-Wachse sind ausgewählt aus der Gruppe bestehend aus Homopolymerisaten des Ethylens oder höhere 1-Olefine mit 3 bis 10 C-Atomen oder deren Copolymerisate, bevorzugt Ethylen, Propylen, iso-Buten, weiter bevorzugt Ethylen oder Propylen, und besonders bevorzugt Ethylen und/oder Copolymerisate derselben.

Gemäß einer weiteren Ausführungsform der erfindungsgemäßen Schichtenanordnung sind die synthetischen hochviskosen Polyolefin-Wachse ausgewählt aus der Gruppe bestehend aus Homopolymerisaten des Ethylens, des Propylen, iso-Buten, bevorzugt Ethylen oder Propylen, besonders bevorzugt Ethylen und/oder Copolymerisate derselben.

Gemäß einer weiteren Ausführungsform der erfindungsgemäßen Schichtenanordnung sind die synthetischen hochviskosen Polyolefin-Wachse ausgewählt aus der Gruppe bestehend aus Polyethylen (PE), bspw. Polyethylen hoher Dichte (PE-HD oder HDPE), Polyethylen mittlerer Dichte (PE-MD oder MDPE), Polyethylen niedriger Dichte (PE-LD oder LDPE) und/oder Copolymerisate derselben.

Es hat sich überraschenderweise gezeigt, dass eine Trennschicht aus Nitrozellulose, Carboxymethylcellulose (CMC) oder Stärke, bspw. Maisstärke oder Weizenstärke und/oder zumindest ein Derivat von den vorgenannten, bevorzugt von Nitrozellulose und/oder zumindest einem Derivat hiervon und Zusatz von hochviskosen Wachsen, insbesondere synthetische hochviskose Polyolefin-Wachse die ggf. raue und ggf. poröse Oberfläche einer angeordneten Trägerschicht, die insbesondere natürlichen Faserstoff aufweist oder aus ihm besteht, wie bspw. Papier oder Pappe, dadurch "abgedeckt" wird und somit die Haftung der an der dergestaltigen Trennschicht angeordneten Trägerschicht im Vergleich zu unbehandelten Trägerschichtoberfläche, wie sie im Stand der Technik verwendet wird, signifikant verringert wird. Ohne an die Theorie gebunden zu sein, wird angenommen, dass aufgrund der Polarität und Steifigkeit der Nitrozellulose, Carboxymethylcellulose (CMC) oder Stärke gepaart mit der Unpolarität der erfindungsgemäßen Materialien der Deckschicht sich keine Phaseninterpenetration in Form von Makromolekülverschlaufungen, wie bei Grenzschichten aus Polymeren ähnlicher Polaritäten üblich, ausbilden kann. Diese Haftung der Schichten der erfindungsgemäßen Anordnung reicht für die Verformung der Trägerschicht, Trennschicht und Deckschicht in der erfindungsgemäßen Schichtenanordnung, z. B. durch Tiefziehen, wie Thermoformen und deren Weiterverarbeitung aus. Insbesondere bei der Verwendung von Polyethylen (PE), eingeschlossen Polyethylen hoher Dichte (PE-HD oder HDPE), Polyethylen mittlerer Dichte (PE-MD oder MDPE), Polyethylen niedriger Dichte (PE-LD oder LDPE) wurden gute Effekte erzielt. Ohne an die Theorie gebunden zu sein, wird angenommen, dass die Trennschicht aus Nitrozellulose, Carboxymethylcellulose (CMC) oder Stärke, bspw. Maisstärke oder Weizenstärke und/oder zumindest ein Derivat von den vorgenannten, bevorzugt von Nitrozellulose und/oder zumindest einem Derivat hiervon dabei beim Trennen der Deckschicht von der Trägerschicht im Bereich der Trennschicht einen Faserriss in der Trägerschicht verhindert.

Gemäß einer weiteren Ausführungsform der erfindungsgemäßen Schichtenanordnung ist das zumindest eine Bindemittel Nitrocellulose, Carboxymethylcellulose (CMC) oder Stärke, bspw. Maisstärke oder Weizenstärke und/oder zumindest ein Derivat von den vorgenannten und das zumindest eine Trennmittel ist ausgewählt aus einer Gruppe bestehend aus zweiten Additiven, wobei die zweiten Additive natürliche hochviskose Wachse, ausgewählt aus der Gruppe bestehend aus Paraffin, Korkwachs, Bienenwachs, Lanolin und/oder Mischungen derselben, insbesondere Paraffin, ist.

Gemäß einer weiteren Ausführungsform der erfindungsgemäßen Schichtenanordnung weist die Trennschicht zumindest ein Bindemittel und zumindest ein Trennmittel in einem bestimmten Verhältnis jeweils im trockenen Zustand auf, das 90 : 10 und insbesondere 99,5 : 0,5 oder 95 : 5 ist.

Gemäß einer weiteren Ausführungsform der erfindungsgemäßen Schichtenanordnung hat die Trägerschicht eine Dicke von 0,1 mm und 2 mm, bevorzugt von 0,1 mm und 1 mm und besonders bevorzugt von 0,2 mm und 0,8 mm und/oder die Trennschicht eine Dicke von 0,1 µm und 300 µm, bevorzugt von 0,1 µm und 50 µm und besonders bevorzugt von 0,1 µm und 20 µm, und/oder die Deckschicht eine Dicke von 10 µm und 2000 µm, bevorzugt von 15 µm und 200 µm und besonders bevorzugt von 15 µm und 50 µm.

Gemäß einer weiteren Ausführungsform der erfindungsgemäßen Schichtenanordnung weist die Trägerschicht ein Flächengewicht von 40 - 1000 g, bevorzugt von 150 - 600 g und besonders bevorzugt von 100 - 500 g auf.

Gemäß einer weiteren Ausführungsform der erfindungsgemäßen Schichtenanordnung weist die die Trägerschicht eine Rauheit von 12 - 4000 sec bestimmt nach Bekk (DIN 53 107) und/oder 30 - 3.000 mL/min bestimmt nach Bendtsen (DIN 53 108) und/oder 0,6 - 175 µm^{∗}100 bestimmt nach Parker Print Surf (PPS; ISO 8791-4), insbesondere bei Naturpapieren eine Rauheit von 12 - 320 sec bestimmt nach Bekk (DIN 53 107) und/oder 140 - 3.000 mL/min bestimmt nach Bendtsen (DIN 53 108) und bei veredelten oder gestrichenen Papieren eine Rauheit von 35 - 4000 sec bestimmt nach Bekk (DIN 53 107) und/oder 30 - 2.200 mL/min bestimmt nach Bendtsen (DIN 53 108) und/oder 0,6 - 175 µm^{∗}100 bestimmt nach Parker Print Surf (PPS; ISO 8791-4) auf.

Gemäß einer Ausführungsform der erfindungsgemäßen Schichtenanordnung ist die Schichtenanordnung tiefgezogen, um einen Formkörper mit wenigstens einer Vertiefung zu bilden, die zur Aufnahme von Füllgut, z.B. Lebensmittel, geeignet ist. Hierfür ist es insbesondere vom Vorteil, dass die Trägerschicht, die Trennschicht und die Deckschicht tiefziehfähig sind. Die erfindungsgemäße Schichtenanordnung kann hierbei die Form eines Behälters mit muldenförmiger Ausnehmung varianter Geometrie haben, bspw. schalenförmig, wannenförmig, zylinderförmig und dergleichen ausgestaltet sein.

Gemäß einer weiteren Ausführungsform der erfindungsgemäßen Schichtenanordnung ist die Deckschicht im Wesentlichen nicht permeable für Feuchte, Gase, Aromen und/oder Fette. Dies dient insbesondere bei der Verwendung als Verpackung zur Bewahrung der produkteigenen Aromen, insbesondere unter einer ggf. vorhandenen Schutzgasatmosphäre, wie sie insbesondere bei frischen Lebensmitteln üblich ist. Eine derartige Schichtenanordnung bildet somit die Basis und ist besonders geeignet, ein Füllgut, dass darin verpackt wird, vor äußeren Einflüssen, wie wässrige Feuchte, Gase, bspw. Sauerstoff und/oder Wasserdampf, atmosphärische Fremdaromen (negative Aromen, Geruch) zu schützen. Sie dient gleichsam als physische Barriere für Schadorganismen, wie Bakterien, Viren und Pilzen. Weiterhin dient die Impermeabilität gegenüber Aromen und/oder Fetten bei Verwendung als Verpackung als Grundlage der aromadichten Abschottung des verpackten Füllguts.

Des Weiteren liegt es im Sinne der vorliegenden Erfindung, eine Verpackung für ein Füllgut, insbesondere für ein Lebensmittel, wie z.B. Käse, Fleisch, Geflügel, Fisch und Erzeugnisse aus den vorgenannten zur Verfügung zu stellen, aufweisend eine erfindungsgemäße Schichtenanordnung der beschriebenen Art und zusätzlich aufweisend:
eine Hüllschicht mit einer Oberseite und einer Unterseite, welche sich im Wesentlichen über die gesamte Fläche der Deckschicht erstreckt, wobei die Deckschicht um ihre gesamte Fläche umlaufende randständige Verbindungsabschnitte aufweist, an welche die Deckschicht mit der Hüllschicht über eine stoffschlüssige Fläche-Fläche-Verbindung wenigstens partiell peelfähig verbunden ist.

Eine solche "Peelfähigkeit" kann insbesondere durch Zusatz von Zuschlagstoffen in der Hüllfolie ermöglicht werden, die ein Lösen bzw. Trennen der Hüllschicht im Bereich der stoffschlüssigen Fläche-Fläche-Verbindung erleichtern.

Gemäß einer Ausführungsform der erfindungsgemäßen Verpackung wird zwischen der Hüllschicht und der Deckschicht ein Hohlraum gebildet, der zur Aufnahme von Füllgut, z.B. Lebensmittel, geeignet ist. Hierfür ist es insbesondere vom Vorteil, dass die Trägerschicht, die Trennschicht und die Deckschicht tiefziehfähig sind. Die erfindungsgemäße Schichtenanordnung ist hierbei tiefgezogen, um einen Formkörper mit wenigstens einer Vertiefung zu bilden (Hohlkörper), der zur Aufnahme von Füllgut, z.B. Lebensmittel, geeignet ist. Die erfindungsgemäße Schichtenanordnung kann hierbei die Form eines Behälters mit muldenförmiger Ausnehmung varianter Geometrie haben, bspw. schalenförmig, wannenförmig, zylinderförmig und dergleichen ausgestaltet sein. Die Hüllschicht ist hierbei in der beschriebenen Weise über die um die gesamte Fläche der Deckschicht umlaufenden randständigen Verbindungsabschnitte mit der Deckschicht verbunden. Die Hüllschicht ist hierbei vorzugsweise im Wesentlichen plan ausgestaltet.

Um die Hüllschicht von der Deckschicht im Bereich der umlaufenden randständigen Verbindungsabschnitte zu trennen, greift der Verbraucher einfach einen Teil des Rands der Hüllschicht und zieht oder "schält"/"peelt" die Hüllschicht von den umlaufenden randständigen Verbindungsabschnitten der Deckschicht ab und trennt damit die Hüllschicht von der Deckschicht zumindest partiell oder alternativ vollständig ab.

Gemäß einer weiteren Ausführungsform der erfindungsgemäßen Verpackung ist eine zweite Peelkraft, die aufgewendet werden muss, um die Unterseite der Hüllschicht von der Oberseite der Deckschicht zu trennen 1 - 10 N/15mm, bevorzugt 2 - 8 N/15mm und besonders bevorzugt
3 - 6 N/15mm.

Gemäß einer weiteren Ausführungsform der erfindungsgemäßen Verpackung ist die erste Peelkraft, die aufgewendet werden muss, um die Trägerschicht gegenüber der Deckschicht im Bereich der Trennschicht zu trennen niedriger als die zweite Peelkraft, die aufgewendet werden muss, um die Unterseite der Hüllschicht von der Oberseite der Deckschicht zu trennen.

Gemäß einer weiteren Ausführungsform der erfindungsgemäßen Verpackung ist die erste Peelkraft 60 - 25%, bevorzugt 60 - 40% und besonders bevorzugt 55 - 45 % niedriger ist als die zweite Peelkraft.

Gemäß einer weiteren Ausführungsform der erfindungsgemäßen Verpackung ist an einem randständigen Ende der Deckschicht zumindest eine Trennhilfe zum Trennen der Unterseite der Trennschicht gegenüber der Oberseite der Trägerschicht vorgesehen, welche insbesondere als Trennlasche ausgebildet ist und/oder an einem randständigen Ende der Deckschicht oder an einem randständigen Ende der Hüllschicht zumindest eine Öffnungshilfe zum Trennen der Unterseite der Hüllschicht gegenüber der Oberseite der Deckschicht vorgesehen, welche insbesondere als Öffnungslasche ausgebildet ist.

Als Trennhilfe kommen wiederum alle denkbaren Strukturen und deren Anordnungen in Frage, die im Stand der Technik bekannt sind und die die Trennung der Trägerschicht gegenüber der Deckschicht im Bereich der Trennschicht ermöglichen, bspw. eine Trennlasche. Vorzugsweise ist wenigstens eine von solchen Stand der Technik Strukturen der Trennhilfe randständig an der Trägerschicht, der Trennschicht und/oder der Deckschicht vorhanden, vorzugsweise an der Deckschicht.

Als Öffnungshilfe kommen alle denkbaren Strukturen und deren Anordnungen in Frage, die im Stand der Technik bekannt sind und die die Trennung der Hüllschicht gegenüber der Deckschicht ermöglichen, bspw. eine Öffnungslasche. Vorzugsweise ist wenigstens eine von solchen Stand der Technik Strukturen der Öffnungshilfe an einem randständigen Ende der Deckschicht oder an einem randständigen Ende der Hüllschicht vorhanden, vorzugsweise an der Hüllschicht.

Gemäß einer weiteren Ausführungsform der erfindungsgemäßen Verpackung ist zumindest eine Haltefläche, welche die Unterseite der Hüllschicht mit der korrespondierenden Oberseite der Deckschicht verbindet, in der Nähe eines zweiten randständigen Endes der Deckschicht und eines damit korrespondierenden zweiten Endes der Hüllschicht angeordnet, welche diametral oder diagonal entgegengesetzt zur Öffnungshilfe positioniert.

Gemäß einer weiteren Ausführungsform der erfindungsgemäßen Verpackung ist eine dritte Peelkraft, die aufgewendet werden muss, um die Hüllschicht von der Deckschicht im Bereich der zumindest einen Haltefläche zu lösen, größer als die erste Peelkraft.

Aufgrund der derart beschriebenen Anordnung von Öffnungshilfe und Haltefläche mit entsprechenden Peelkräften ist es möglich zuerst die Hüllschicht partiell bis zur Haltefläche von der Deckschicht zu trennen / "peelen". Ist ein Füllgut in der Verpackung, so wird es durch diesen Trennungsvorgang bis zur Haltefläche dem Verbraucher für eine Entnahme zugänglich. Er kann das Füllgut entnehmen. Nach der Füllgutentnahme kann der Verbraucher aufgrund der gegebenen unterschiedlichen ersten, zweiten und dritten Peelkräfte die Hüllschicht an dem bereits abgetrennten Bereich erfassen und in Richtung der Öffnungshilfe, insbesondere in Abhängigkeit der Geometrie der Verpackung diametral entgegengesetzt bzw. diagonal entgegengesetzt zur vorherigen Öffnungsbewegung ziehen. Da Hüllschicht und Deckschicht im Bereich der Haltefläche stärker miteinander verbunden sind als die Deckschicht und Trägerschicht im Grenzflächenbereich, löst sich beginnend im Bereich der Haltefläche die Deckschicht somit zunehmend in Richtung Öffnungshilfe von der angrenzenden Trägerschicht im Bereich der Trennschicht vollständig ab. Im Falle von kreisförmigen Verpackungen, z.B. runden Schalen ist diese Trennungsbewegung der Deckschicht von der Trägerschicht diagonal entgegengesetzt zur vorherigen Öffnungsbewegung und im Falle von länglichen Verpackungen, z.b. wannenförmigen Schalen diagonal entgegengesetzt zur vorherigen Öffnungsbewegung. Die Hüllschicht und die Deckschicht bleiben daher zumindest im Bereich der Haltefläche partiell verbunden. Dadurch ist es möglich in der Art eines "dualen Peels" die Hüllschicht und die Deckschicht zusammen in einem Stück im Bereich der Trennschicht von der Trägerschicht zu trennen.

Nach Verwendung als Verpackung, bspw. als Lebensmittelverpackung können so die einzelnen kombinierten Rohstoffphasen der Trägerschicht und die partiell verbundene Hüllschicht-Deckschicht Anordnung einer sinnvollen Entsorgung/Wiederverwendung/ Verwertung zugeführt werden. Dabei kann die Hüllschicht-Deckschicht Anordnung in einem Stück einer sinnvollen Entsorgung/Wiederverwendung/Verwertung zugeführt werden oder bei Applikation der entsprechenden dritten Peelkraft voneinander getrennt werden und getrennt einer sinnvollen Entsorgung/Wiederverwendung/Verwertung zugeführt werden.

Gemäß einer bevorzugten Ausführungsform der erfindungsgemäßen Verpackung ist die Haltefläche, welche die Unterseite der Hüllschicht mit der Oberseite der Deckschicht verbindet eine Schweißnaht. Nach Verwendung als Verpackung, bspw. als Lebensmittelverpackung können so die einzelnen kombinierten Rohstoffphasen der Trägerschicht und die partiell verschweißte, also partiell fest verbundene Hüllschicht-Deckschicht Anordnung einer sinnvollen Entsorgung/ Wiederverwendung / Verwertung zugeführt werden.

Gemäß einer bevorzugten Ausführungsform der erfindungsgemäßen Verpackung bei der nach der Trennung der Deckschicht von der Trägerschicht im Bereich der Trennschicht die Trennschicht an der Deckschicht verbleibt, kann die verbliebene Trennschicht-Deckschicht- Hüllschicht- Anordnung in einem Stück einer sinnvollen Entsorgung/Wiederverwendung/ Verwertung zugeführt. Bevorzugt kann dann bei Applikation der entsprechenden dritten Peelkraft die Trennschicht-Deckschicht-Hüllschicht-Anordnung im Bereich Hüllschicht-Deckschicht voneinander getrennt werden und getrennt einer sinnvollen Entsorgung/Wiederverwendung/ Verwertung zugeführt werden. Bevorzugt kann zuvor die Trennschicht von der Deckschicht gelöst werden und somit alle Schichten der Verpackung getrennt einer sinnvollen Entsorgung/Wiederverwendung/ Verwertung zugeführt werden.

Die Haltefläche kann jegliche Strukturen aufweisen, die im Stand der Technik bekannt sind.

Gemäß einer Ausführungsform der erfindungsgemäßen Verpackung ist die Haltefläche kreisförmig, linienförmig, zickzackförmig und/oder mäanderförmig ausgebildet.

Die Trägerschicht, die Deckschicht, die Trennschicht und/oder die Hüllschicht können jeweils einschichtig oder mehrschichtig ausgebildet sein.

Gemäß einer bevorzugten Ausführungsform der erfindungsgemäßen Verpackung sind die Trägerschicht, die Deckschicht und/oder die Hüllschicht einschichtig oder mehrschichtig ausgebildet und die Trennschicht ist einschichtig ausgebildet.

Weiterhin können die Trägerschicht, die Deckschicht, die Trennschicht und/oder die Hüllschicht einseitig oder beidseitig bedruckt sein.

Gemäß einer Ausführungsform der erfindungsgemäßen Verpackung ist die Hüllschicht als Hart- oder Weichfolie ausgebildet und umfasst Materialen, die aus der Gruppe ausgewählt sind bestehend aus polymeren Kunststoffen, wie z.B. Polyethylenterephthalat (PET), amorphes Polyethylenterephthalat (APET), Polyhydroxyalkanoat, Polymethylmethacrylat, Polypropylen (PP), Polystyrol (PS), Polyvinylchlorid (PVC), Polyethylen (PE), bspw. Polyethylen hoher Dichte (PE-HD oder HDPE), Polyethylen mittlerer Dichte (PE-MD oder MDPE), Polyethylen niedriger Dichte (PE-LD oder LDPE), Ethylen-Vinylalcohol-Copolymere (EVOH); biologisch abbaubare Polymere, bspw. Biopolyester, insbesondere biologisch abbaubare, thermoplastische Polyester, wie bspw. Polyhydroxycarbonsäuren, wie Polymilchsäure (auch als Polylactid oder PLA bezeichnet), thermoplastische Stärke oder Polyhydroxyfettsäuren (PHF); Folienlaminaten; metallisierte Folien; oder Mischungen der vorgenannten.

Gemäß einer Ausführungsform der erfindungsgemäßen Verpackung hat die Trägerschicht eine Dicke von 0,1 mm und 2 mm, bevorzugt von 0,1 mm und 1 mm und besonders bevorzugt von 0,2 mm und 0,8 mm und/oder die Trennschicht eine Dicke von 0,1 µm und 300 µm, bevorzugt von 0,1 µm und 50 µm und besonders bevorzugt von 0,1 µm und 20 µm, und/oder die Deckschicht eine Dicke von 10 µm und 2000 µm, bevorzugt von 15 µm und 200 µm und besonders bevorzugt von 15 µm und 50 µm und/oder die Hüllschicht eine Dicke von 10 µm und 2000 µm, bevorzugt von 20 µm und 500 µm und besonders bevorzugt von 30 µm und 250 µm.

Gemäß einer Ausführungsform der erfindungsgemäßen Verpackung sind die Deckschicht und die Hüllschicht im Wesentlichen nicht permeable für Feuchte, Gase, Aromen und/oder Fette.

Auf entsprechende Vorteile bei einer dergestalt nicht permeablen Ausgestaltung der erfindungsgemäßen Verpackung wird auf die entsprechende Erwähnung bei der erfindungsgemäßen Schichtenanordnung verwiesen.

Gegenstand der vorliegenden Erfindung ist weiterhin ein Verfahren zur Herstellung einer erfindungsgemäßen Schichtenanordnung oder zur Herstellung einer Verpackung unter Einsatz der erfindungsgemäßen Schichtenanordnung.

Prinzipiell lässt sich eine erfindungsgemäße Schichtenanordnung durch Extrusionskaschieren, (Kleber-)Kaschieren, oder einfach durch Applikation von Druck mit/oder ohne Wärme herstellen.

Die Trägerschicht und die Deckschicht der erfindungsgemäßen Schichtenanordnung können hierbei im erfindungsgemäßen Herstellungsverfahren, durch Extrusion, bspw. Coextrusion auf entgegengesetzte Seiten einer vorgelegten Trennschicht aufgetragen und mit der Trennschicht verbunden werden, um die erfindungsgemäße Schichtenanordnung zu generieren. Alternativ kann eine erfindungsgemäße Schichtenanordnung mittels Klebekaschieren, also durch Verkleben der Trägerschicht und der Deckschicht mit einer vorgelegten Trennschicht jeweils auf entgegengesetzten Seiten der Trennschicht hergestellt werden.

Gemäß einer bevorzugten Ausführungsform des Verfahrens zur Herstellung einer erfindungsgemäßen Schichtenanordnung können beim (Co-)Extrusionskaschieren die eingesetzten Materialien (zweite Additive) des Trennmittels eine entsprechend höhere Schmelztemperatur haben als die eingesetzte (Co-)Extrusionstemperatur.

Weiterhin kann eine erfindungsgemäße Schichtenanordnung bei vorgelegter Schichtenanordnung in der Abfolge von Trägerschicht, Trennschicht und Deckschicht einfach durch Applikation von Druck mit/oder ohne Wärme hergestellt werden, dabei kann alternativ bei der Anordnung der Schichten die Trennschicht mittels eines Streichverfahrens auf die Trägerschicht und/oder die Deckschicht aufgetragen werden bevor Druck und/oder Wärme appliziert wird.

Die Herstellung von Formkörpern unter Einsatz der erfindungsgemäßen Schichtenanordnung ist ebenfalls Gegenstand der vorliegenden Erfindung.

Formkörper im Sinne der Erfindung wie bspw. Platten, Tafeln, Profile, Hohlkörper, insbesondere schalenförmige, wannenförmige, zylinderförmige und dergleichen gestaltete Hohlkörper sind im Stand der Technik bekannt.

Die vorliegende Erfindung umfasst ferner auch die Verwendung der erfindungsgemäßen Schichtenanordnung für die Herstellung einer Verpackung für ein Füllgut, insbesondere für ein Lebensmittel, wie z.B. Käse, Fleisch, Geflügel, Fisch und Erzeugnisse aus den vorgenannten.

Stand der Technik-Hüllschichten, die hierfür verwendet werden können, sind bekannt.

Die Erfindung wird nachfolgend anhand bevorzugter Ausführungsbeispiele erläutert, wobei darauf hingewiesen wird, dass durch diese Beispiele Abwandlungen bzw. Ergänzungen, wie sie sich für den Fachmann unmittelbar ergeben, mit umfasst sind. Darüber hinaus stellen diese Ausführungsbeispiele keine Beschränkung der Erfindung in der Art dar, dass Abwandlungen und Ergänzungen im Umfang der vorliegenden Erfindung liegen.

### Dabei zeigen:

**Fig. 1A** eine erfindungsgemäße Verpackung mit Füllgut in Draufsicht
**Fig. 1B** ein Längsschnitt der erfindungsgemäßen Verpackung mit Füllgut aus Fig. 1A
**Fig. 2A** die erfindungsgemäße Verpackung aus Fig. 1A mit Füllgut in Draufsicht mit einer Öffnungshilfe in Form einer Öffnungslasche, die partiell abpeelt ist von der Deckschicht und die eingezeichnete Peelrichtung (Richtungspfeil) der Hüllschicht von der Deckschicht.
**Fig. 2B** ein Längsschnitt der erfindungsgemäßen Verpackung mit Füllgut aus Fig. 2A
**Fig. 3A** die erfindungsgemäße Verpackung aus Fig. 2A ohne Füllgut in Draufsicht mit abgepeelter Hüllschicht von der Deckschicht bis zur Haltefläche und partieller Lösung der Deckschicht von der Trägerschicht im Bereich der Trennschicht.
**Fig. 3B** ein Längsschnitt der erfindungsgemäßen Verpackung ohne Füllgut aus Fig. 3A
**Fig. 4** ein fotografisches Lichtbild einer erfindungsgemäßen Verpackung mit beschrifteter Hüllschicht ohne Füllgut in Draufsicht
**Fig. 5** ein fotografisches Lichtbild der erfindungsgemäßen Verpackung aus Fig. 4 mit abgepeelter Hüllschicht von der Deckschicht bis zur Haltefläche.
**Fig. 6** ein fotografisches Lichtbild der erfindungsgemäßen Verpackung aus Fig. 5 mit partiell abgepeelter Deckschicht von der Trägerschicht im Bereich der Trennschicht.
**Fig. 7** ein fotografisches Lichtbild der erfindungsgemäßen Verpackung aus Fig. 6 mit vollständig abgepeelter Deckschicht von der Trägerschicht im Bereich der Trennschicht mit getrennt vorliegender Trägerschicht und zumindest partiell verbundener Trennschicht-Deckschicht-Hüllschicht-Anordnung.

### Funktionsweise einer bevorzugten Ausführungsform einer erfindungsgemäßen Verpackung

### ("dualer Peel")

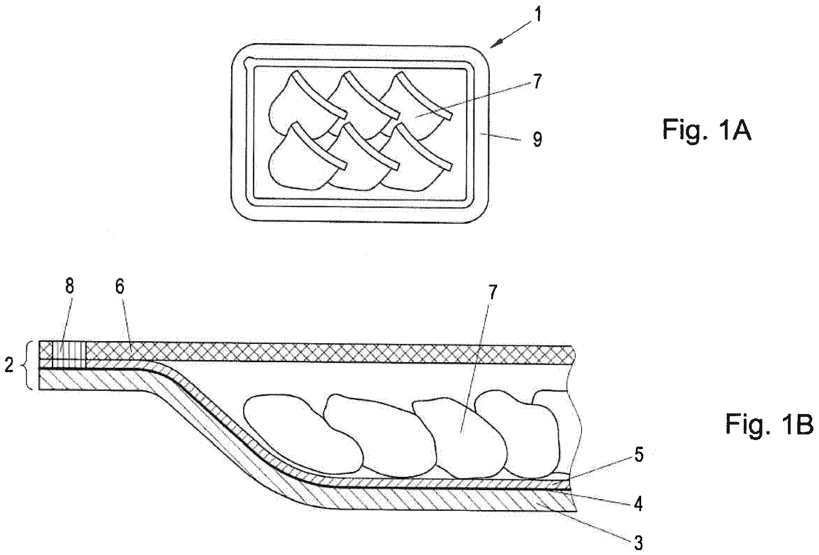

Fig. 1 A, 1B zeigen eine bevorzugte Ausführungsform einer erfindungsgemäßen Verpackung (1) unter Nutzung einer erfindungsgemäßen Schichtenanordnung (2) aus Trägerschicht (3), Trennschicht (4) und Deckschicht (5), auf die im Bereich der Deckschicht eine erfindungsgemäße Hüllschicht (6) angeordnet ist. Im Aufnahmeraum zwischen Hüllschicht und Deckschicht, liegt Füllgut (7), hier bspw. Wurstaufschnitt. Zu sehen ist die Öffnungshilfe (8), hier in Form einer Öffnungslasche. Um die Hüllschicht von der Deckschicht im Bereich der umlaufenden randständigen Verbindungsabschnitte (9) zu trennen, greift der Verbraucher einfach an die Öffnungslasche am Rand der Verpackung und zieht oder "schält"/"peelt" die Hüllschicht von den umlaufenden randständigen Verbindungsabschnitten der Deckschicht ab und trennt damit die Hüllschicht von der Deckschicht vollständig bis zur Haltefläche (10) ab, an der Hüllschicht und Deckschicht durch Verschweißen verbunden sind (Schweißnaht).

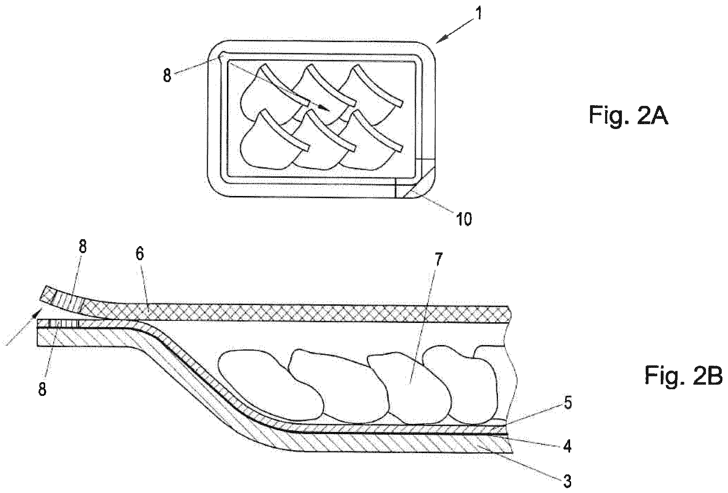

In Fig. 2A, 2B sieht man den Beginn des Abpeelvorgangs mit partiell abpeelter Öffnungshilfe in Form einer Öffnungslasche und eingezeichneter Peelrichtung der Hüllschicht von der Deckschicht.

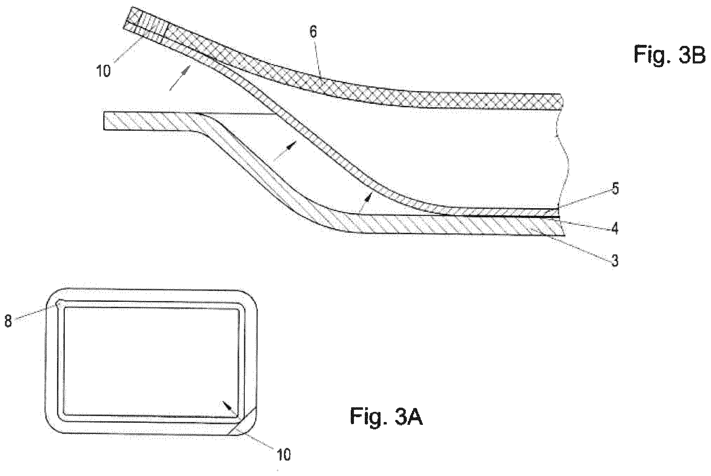

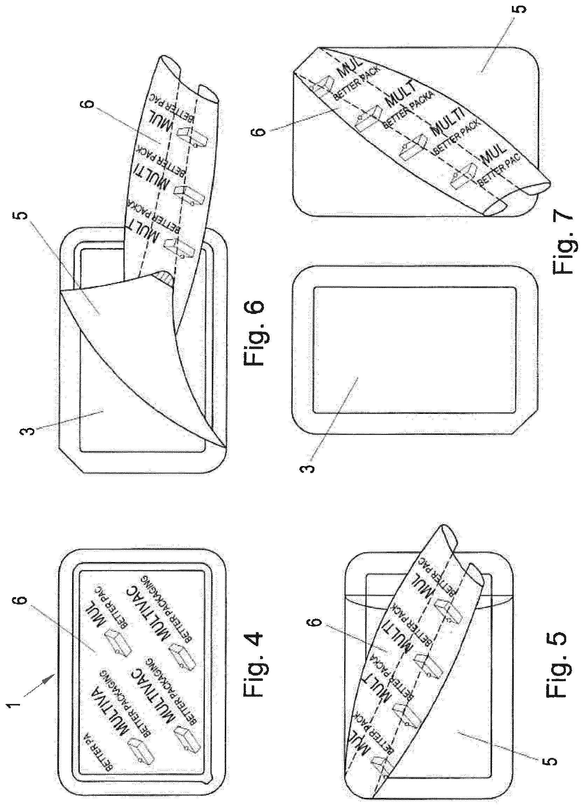

Aufgrund der derart beschriebenen Anordnung von Öffnungshilfe und Haltefläche (Fig. 2A, 3A) mit entsprechenden Peelkräften ist es möglich zuerst von der Öffnungslasche an in Richtung der Haltefläche (siehe Richtungspfeil Fig. 2A) die Hüllschicht partiell bis zur Haltefläche von der Deckschicht zu trennen / "peelen". Das in der Verpackung befindliche Füllgut wird durch diesen Trennungsvorgang der bis zur Haltefläche reicht dem Verbraucher für eine Entnahme zugänglich. Deckschicht und Trägerschicht verbleiben aber zumindest im Bereich der Haltefläche partiell verbunden. Er kann das Füllgut entnehmen. Nach der Füllgutentnahme kann der Verbraucher aufgrund der gegebenen unterschiedlichen ersten, zweiten und dritten Peelkräfte die Hüllschicht an dem bereits abgetrennten Bereich erfassen und in Richtung der Öffnungshilfe diagonal entgegengesetzt zur vorherigen Öffnungsbewegung (siehe Richtungspfeil Fig. 3A) ziehen (Fig. 3A, 3B, 5, 6). Die Deckschicht trennt sich dadurch zunehmend von der Trägerschicht im Bereich der Trennschicht in Richtung der Ziehbewegung (Richtungspfeile Fig. 3B). Dadurch ist es möglich in der Art eines "dualen Peels" die Hüllschicht und die Deckschicht zusammen in einem Stück im Bereich der Trennschicht von der Trägerschicht zu trennen (Fig. 3A, 3B, 5, 6). Das Resultat ist eine vollständig von der Trennschicht-Deckschicht-Hüllschicht-Anordnung abgepeelte und getrennt vorliegende Trägerschicht und eine getrennt vorliegende zumindest partiell verbundene Trennschicht-Deckschicht-Hüllschicht-Anordnung (Fig. 7).

Nach Verwendung als Verpackung, bspw. als Lebensmittelverpackung können so die einzelnen kombinierten Rohstoffphasen der Trägerschicht und die partiell verbundene Trennschicht- Deckschicht-Hüllschicht-Anordnung einer sinnvollen Entsorgung/Wiederverwendung/ Verwertung zugeführt werden.

## Patentansprüche

1. Schichtenanordnung aufweisend:
- eine Trägerschicht, die tiefziehfähig ausgebildet ist, aufweisend eine Oberseite und eine Unterseite;
- eine Deckschicht, die tiefziehfähig ausgebildet ist, aufweisend eine Oberseite und eine Unterseite, wobei sich die Deckschicht im Wesentlichen über die gesamte Oberseite und/oder Unterseite der Trägerschicht erstreckt,
zumindest eine Trennschicht zwischen der Trägerschicht und der Deckschicht angeordnet ist, welche sich im Wesentlichen über die gesamte Fläche zwischen der Trägerschicht und der Deckschicht erstreckt,
wobei die Trägerschicht gegenüber der Deckschicht im Bereich der Trennschicht mit einer ersten Peelkraft von 0,5 - 6N/15mm, gemessen mit einem T-Peeltest, 90° (DIN 55529), getrennt werden kann
**dadurch gekennzeichnet, dass**
die Trennschicht tiefziehfähig ausgebildet ist und Materialien umfasst, die zumindest ein Bindemittel, ausgewählt aus einer Gruppe bestehend aus ersten Additiven, wobei die ersten Additiven Nitrocellulose, Carboxymethylcellulose (CMC) und Stärke und/oder zumindest einem Derivat von den vorgenannten sind und zumindest ein Trennmittel aufweist, ausgewählt aus einer Gruppe bestehend aus zweiten Additiven mit einer Schmelztemperatur von 40 - 250°C, insbesondere anorganischen Additiven, wie Silikone und/oder aus natürlichen, synthetischen und/oder teilsynthetischen hochviskosen Wachsen oder wachsähnlichen Substanzen und/oder zumindest einem Derivat von den vorgenannten.

2. Schichtenanordnung nach Anspruch 1, **dadurch gekennzeichnet, dass** die Trägerschicht gegenüber der Deckschicht im Bereich der Trennschicht mit einer ersten Peelkraft bevorzugt von 1 - 4 N/15mm, und besonders bevorzugt von 1,4 - 1,5 N/15mm getrennt werden kann.

3. Schichtenanordnung nach einem der Ansprüche 1 oder 2, **dadurch gekennzeichnet, dass**
an einem randständigen Ende der Deckschicht zumindest eine Trennhilfe zum Trennen der Unterseite der Trennschicht gegenüber der Oberseite der Trägerschicht vorgesehen ist, welche insbesondere als Trennlasche ausgebildet ist.

4. Schichtenanordnung nach einem der vorhergehenden Ansprüche, **dadurch gekennzeichnet, dass**
die Trägerschicht zu 40% - 100% oder 75% - 100%, bevorzugt von 50% - 80% oder 90% - 100% bezogen auf die Gesamtmasse der Trägerschicht aus natürlichem Faserstoff besteht und der Rest aus Hilfsstoffen besteht.

5. Schichtenanordnung nach einem der vorhergehenden Ansprüche, **dadurch gekennzeichnet, dass**
die Trennschicht ein Trennmittel aufweist, ausgewählt aus einer Gruppe bestehend aus zweiten Additiven mit einer Schmelztemperatur bevorzugt von 60 - 200°C oder 100 - 200°C und besonders bevorzugt von 110 - 150°C.

6. Schichtenanordnung nach Anspruch 1 und 5, **dadurch gekennzeichnet, dass** das zumindest eine Trennmittel ausgewählt ist aus einer Gruppe bestehend aus zweiten Additiven, wobei die zweiten Additive natürliche, synthetische und/oder teilsynthetische hochviskose Wachse und/oder zumindest ein Derivat von den vorgenannten sind.

7. Verpackung für ein Füllgut, insbesondere für ein Lebensmittel, wie z.B. Käse, Fleisch, Geflügel, Fisch und Erzeugnisse aus den vorgenannten, aufweisend eine Schichtenanordnung nach einem der Ansprüche 1 bis 6 und zusätzlich aufweisend:
- eine Hüllschicht mit einer Oberseite und einer Unterseite, welche sich im Wesentlichen über die gesamte Fläche der Deckschicht erstreckt,
wobei die Deckschicht um ihre gesamte Fläche umlaufende randständige Verbindungsabschnitte aufweist, an welche die Deckschicht mit der Hüllschicht über eine stoffschlüssige Fläche-Fläche-Verbindung wenigstens partiell peelfähig verbunden ist.

8. Verpackung nach Anspruch nach Anspruch 7, **dadurch gekennzeichnet, dass**
eine zweite Peelkraft, die aufgewendet werden muss, um die Unterseite der Hüllschicht von der Oberseite der Deckschicht zu trennen 1 - 10 N/15mm, bevorzugt 2 - 8 N/15mm und besonders bevorzugt 3 - 6 N/15mm, gemessen mit einem T-Peeltest, 90° (DIN 55529), ist.

9. Verpackung nach Anspruch 8, **dadurch gekennzeichnet, dass**
die erste Peelkraft, die aufgewendet werden muss, um die Trägerschicht gegenüber der Deckschicht im Bereich der Trennschicht zu trennen niedriger ist als die zweite Peelkraft, die aufgewendet werden muss, um die Unterseite der Hüllschicht von der Oberseite der Deckschicht zu trennen.

10. Verpackung nach einem der Ansprüche 7 bis 9, **dadurch gekennzeichnet, dass**
an einem randständigen Ende der Deckschicht zumindest eine Öffnungshilfe zum Trennen der Unterseite der Trennschicht gegenüber der Oberseite der Trägerschicht vorgesehen ist, welche insbesondere als Öffnungslasche ausgebildet ist und/oder an einem randständigen Ende der Deckschicht oder an einem randständigen Ende der Hüllschicht zumindest eine Öffnungshilfe zum Trennen der Unterseite der Hüllschicht gegenüber der Oberseite der Deckschicht vorgesehen ist, welche insbesondere als Öffnungslasche ausgebildet ist.

11. Verpackung nach Anspruch 10, **dadurch gekennzeichnet, dass**
zumindest eine Haltefläche, welche die Unterseite der Hüllschicht mit der korrespondierenden Oberseite der Deckschicht verbindet, in der Nähe eines zweiten randständigen Endes der Deckschicht und eines damit korrespondierenden zweiten Endes der Hüllschicht angeordnet ist, welche diametral oder diagonal entgegengesetzt zur Öffnungshilfe positioniert ist.

12. Verpackung nach Anspruch 11, **dadurch gekennzeichnet, dass**
eine dritte Peelkraft, die aufgewendet werden muss, um die Hüllschicht von der Deckschicht im Bereich der zumindest einen Haltefläche zu lösen, größer ist als die erste Peelkraft.

13. Verpackung nach einem der Ansprüche 7 bis 12, **dadurch gekennzeichnet, dass**
die Hüllschicht als Hart- oderWeichfolie ausgebildet ist und Materialen umfasst, die aus der Gruppe ausgewählt sind bestehend aus polymeren Kunststoffen, wie z.B. Polyethylenterephthalat (PET), amorphes Polyethylenterephthalat (APET), Polyhydroxyalkanoat, Polymethylmethacrylat, Polypropylen (PP), Polystyrol (PS), Polyvinylchlorid (PVC), Polyethylen (PE), bspw. Polyethylen hoher Dichte (PE-HD oder HDPE), Polyethylen mittlerer Dichte (PE-MD oder MDPE), Polyethylen niedriger Dichte (PE-LD oder LDPE), Ethylen-Vinylalcohol-Copolymere (EVOH); biologisch abbaubare Polymere, bspw. Biopolyester, insbesondere biologisch abbaubare, thermoplastische Polyester, wie bspw. Polyhydroxycarbonsäuren, wie Polymilchsäure (Polylactid/PLA), thermoplastische Stärke oder Polyhydroxyfettsäuren (PHF); Folienlaminaten; metallisierte Folien; oder Mischungen der vorgenannten.

14. Verfahren zur Herstellung einer Schichtenanordnung nach einem der Ansprüche 1 bis 6 oderzur Herstellung einerVerpackung nach einem der Ansprüche 7 bis 13.

15. Verwendung einer Schichtenanordnung nach einem der Ansprüche 1 bis 6 für die Herstellung einer Verpackung für ein Füllgut, insbesondere für ein Lebensmittel, wie z.B. Käse, Fleisch, Geflügel, Fisch und Erzeugnisse aus den vorgenannten.

## Claims

1. Layer arrangement having:
- a carrier layer which is constructed to be able to be deep-drawn and which has an upper side and a lower side;
- a covering layer which is constructed to be able to be deep-drawn and which has an upper side and a lower side,
wherein the covering layer extends substantially over the entire upper side and/or lower side of the carrier layer, there is arranged between the carrier layer and the covering layer at least one separation layer which extends substantially over the entire face between the carrier layer and the covering layer,
wherein the carrier layer can be separated with respect to the covering layer in the region of the separation layer with a first peeling force of from 0.5 to 6N/15 mm, measured with a T-peel test, 90° (DIN 55529),
**characterised in that**
the separation layer is constructed to be able to be deep-drawn and comprises materials which have at least one binder selected from a group comprising first additives, wherein the first additives are nitrocellulose, carboxymethylcellulose (CMC) and starch and/or at least one derivative from the above-mentioned materials, and at least one separation agent selected from a group comprising second additives with a melting temperature of from 40 to 250°C, in particular inorganic additives, such as silicone and/or natural, synthetic and/or partially synthetic highly viscous waxes or wax-like substances and/or at least one derivative from the above-mentioned materials.

2. Layer arrangement according to claim 1, **characterised in that** the carrier layer can be separated with respect to the covering layer in the region of the separation layer with a first peeling force preferably of from 1 to 4 N/15 mm, and in a particularly preferred manner of from 1.4 to 1.5 N/15 mm.

3. Layer arrangement according to either claim 1 or 2,
**characterised in that**,
at a marginal end of the covering layer, at least one auxiliary separation means for separating the lower side of the separation layer with respect to the upper side of the carrier layer is provided and is in particular in the form of a separation flap.

4. Layer arrangement according to any one of the preceding claims, **characterised in that**
the carrier layer comprises up to 40% to 100% or 75% to 100%, preferably from 50% to 80% or 90% to 100% natural fibre material with respect to the overall mass of the carrier layer and the remainder comprises auxiliary materials.

5. Layer arrangement according to any one of the preceding claims, **characterised in that**
the separation layer has a separation agent selected from a group comprising second additives having a melting temperature preferably from 60 to 200°C or 100 to 200°C and in a particularly preferred manner from 110 to 150°C.

6. Layer arrangement according to claim 1 and 5,
**characterised in that**
the at least one separation agent is selected from a group comprising second additives, wherein the second additives are natural, synthetic and/or partially synthetic highly viscous waxes and/or at least one derivative from the above-mentioned materials.

7. Packaging for a filling material, in particular for a food product, such as, for example, cheese, meat, poultry, fish and products from the above-mentioned products, having a layer arrangement according to any one of claims 1 to 6 and additionally having:
- a cladding layer which has an upper side and a lower side and which extends substantially over the entire face of the covering layer,
wherein the covering layer has over the entire face thereof circumferential marginal connection portions, at which the covering layer is connected to the cladding layer by means of a materially engaging face/face connection at least partially so as to be able to be peeled.

8. Packaging according to claim 7, **characterised in that** a second peeling force which has to be applied in order to separate the lower side of the cladding layer from the upper side of the covering layer is from 1 to 10 N/15 mm, preferably from 2 to 8 N/15 mm, and in a particularly preferred manner from 3 to 6 N/15 mm, measured with a T-peel test, 90° (DIN 55529).

9. Packaging according to claim 8, **characterised in that** the first peeling force which has to be applied in order to separate the carrier layer with respect to the covering layer in the region of the separation layer is lower than the second peeling force which has to be applied in order to separate the lower side of the cladding layer from the upper side of the covering layer.

10. Packaging according to any one of claims 7 to 9,
**characterised in that**
at a marginal end of the covering layer there is provided for separating the lower side of the separation layer with respect to the upper side of the carrier layer at least one auxiliary opening means which is in particular in the form of an opening flap and/or at a marginal end of the covering layer or at a marginal end of the cladding layer there is provided for separating the lower side of the cladding layer with respect to the upper side of the covering layer at least one auxiliary opening means which in particular is in the form of an opening flap.

11. Packaging according to claim 10, **characterised in that** at least one retention face which connects the lower side of the cladding layer to the corresponding upper side of the covering layer is arranged close to a second marginal end of the covering layer and a corresponding second end of the cladding layer which is positioned diametrically or diagonally opposite the auxiliary opening means.

12. Packaging according to claim 11, **characterised in that** a third peeling force which has to be applied in order to release the cladding layer from the covering layer in the region of the at least one retention face is greater than the first peeling force.

13. Packaging according to any one of claims 7 to 12,
**characterised in that**
the cladding layer is in the form of a hard or soft film and comprises materials which are selected from the group comprising polymer plastics materials, such as, for example, polyethylene terephthalate (PET), amorphous polyethylene terephthalate (APET), polyhydroxyalkanoate, polymethylmethacrylate, polypropylene (PP), polystyrene (PS), polyvinylchloride (PVC), polyethylene (PE), for example, high-density polyethylene (PE-HD or HDPE), medium-density polyethylene (PE-MD or MDPE), low-density polyethylene (PE-LD or LDPE), ethylene vinyl alcohol copolymers (EVOH); biodegradable polymers, for example, biopolyesters, in particular biodegradable thermoplastic polyesters, such as, for example, polyhydroxy carboxylic acids, such as polylactic acid (polylactide/PLA), thermoplastic starch or polyhydroxy fatty acids (PHF); film laminates; metallised foils; or admixtures of the above-mentioned materials.

14. Method for producing a layer arrangement according to any one of claims 1 to 6 or for producing a packaging according to any one of claims 7 to 13.

15. Use of a layer arrangement according to any one of claims 1 to 6 for the production of a packaging for a filling material, in particular for a food product, such as, for example, cheese, meat, poultry, fish and products from the above-mentioned products.

## Revendications

1. Agencement de couches qui présente :
une couche de support, qui est réalisée de façon emboutissable, ayant une face supérieure et une face inférieure ;
une couche de couverture qui est réalisée de façon emboutissable, comportant une face supérieure et une face inférieure, la couche de couverture s'étendant essentiellement sur tout la face supérieure et/ou la face inférieure de la couche de support,
au moins une couche de séparation étant disposée entre la couche de support et la couche de couverture, qui s'étend essentiellement sur toute la surface entre la couche de support et la couche de couverture,
la couche de support pouvant être séparée de la couche de couverture dans la zone de la couche de séparation avec une première force de pelage de 0,5 - 6N/15 mm, mesurée avec un test de pelage en T, 90° (DIN 55529).
**caractérisé en ce que**
la couche de séparation est conçue pour être emboutissable et comprend des matériaux qui ont au moins un liant choisi dans un groupe constitué de premiers additifs, les premiers additifs étant
de la nitrocellulose, de la carboxyméthylcellulose (CMC) et de l'amidon
et/ou au moins un dérivé de celui-ci
et ayant au moins un agent de séparation, choisi dans un groupe constitué de deuxièmes additifs à point de fusion de 40-250°C, en particulier des additifs inorganiques tels que des silicones et/ou des cires haute viscosité naturelles, synthétiques et/ou semi-synthétiques ou des substances analogues à des cires et/ou au moins un dérivé de celles-ci.

2. Agencement de couches selon la revendication 1, **caractérisé en ce que**
la couche de support peut être séparée de la couche de couverture dans la zone de la couche de séparation avec une première force de décollement de préférence de 1-4 N/15 mm, et de manière particulièrement préférée de 1,4-1,5 N/15 mm.

3. Agencement de couches selon l'une des revendications 1 ou 2,
**caractérisé en ce que**
au moins une aide à la séparation pour séparer la face inférieure de la couche de séparation de la face supérieure de la couche de support est prévue à une extrémité marginale de la couche de couverture, laquelle aide est conçue en particulier comme une languette de séparation.

4. Agencement de couches selon l'une des revendications précédentes,
**caractérisé en ce que**
la couche de support est constituée de 40 % à 100 % ou de 75 % à 100 %, de préférence de 50 % à 80 % ou de 90 % à 100 %, sur la base de la masse totale de la couche de support, de fibres naturelles et le reste est constitué de matériaux auxiliaires .

5. Agencement de couches selon l'une des revendications précédentes,
**caractérisé en ce que**
la couche de séparation comporte un agent de séparation choisi dans un groupe constitué de deuxièmes additifs avec un point de fusion de préférence de 60-200°C ou 100-200°C et de manière particulièrement préférée de 110-150°C.

6. Agencement de couches selon les revendications 1 et 5, **caractérisé en ce que**
le au moins un agent de séparation est choisi dans un groupe constitué de deuxièmes additifs, les deuxièmes additifs étant des cires haute viscosité naturelles, synthétiques et/ou semi-synthétiques et/ou au moins un dérivé des susmentionnés.

7. Conditionnement pour un produit de remplissage, notamment pour une denrée alimentaire, telle que du fromage, de la viande, de la volaille, du poisson et des produits de ceux-ci, présentant un agencement de couches selon l'une des revendications 1 à 6 et comportant en outre :
une couche d'enveloppe avec une face supérieure et une face inférieure, qui s'étend essentiellement sur toute la surface de la couche de couverture,
dans lequel la couche de couverture a des sections de connexion périphériques s'étendant sur toute sa surface, auxquelles la couche de couverture est connectée à la couche d'enveloppe via une connexion de matériau surface à surface d'une manière au moins partiellement pelable.

8. Conditionnement selon la revendication 7, **caractérisé en ce que**
une deuxième force de pelage qui doit être appliquée sur la face inférieure de la couche de revêtement à séparer de la face supérieure de la couche de couverture est de 1-10 N/15 mm, de préférence de 2-8 N/15 mm et de manière particulièrement préférée de 3-6 N/15 mm, mesuré avec un test de pelage en T, 90° (DIN 55529) .

9. Conditionnement selon la revendication 8, **caractérisé en ce que**
la première force de pelage qui doit être appliquée pour séparer la couche de support de la couche de couverture dans la région de la couche de séparation est inférieure à la deuxième force de pelage qui doit être appliquée pour séparer la face inférieure de la couche d'enveloppe de la face supérieure de la couche de couverture.

10. Conditionnement selon l'une des revendications 7 à 9, **caractérisé en ce que**
au niveau d'une extrémité marginale de la couche de couverture, au moins une aide à l'ouverture pour séparer la face inférieure de la couche de séparation de la face supérieure de la couche de support est prévue qui est en particulier conçue comme languette d'ouverture, et/ou à une extrémité marginale de la couche de couverture ou à une extrémité marginale de la couche d'enveloppe, au moins une aide à l'ouverture pour séparer la face inférieure de la couche d'enveloppe de la face supérieure de la couche de couverture est prévue, qui est conçue en particulier comme languette d'ouverture.

11. Conditionnement selon la revendication 10, **caractérisé en ce que**
au moins une surface de maintien, dont la face inférieure de la couche se couverture connecte au côté supérieur correspondant de la couche de couverture, est disposée à proximité d'une deuxième extrémité marginale de la couche de couverture et d'une deuxième extrémité de la couche d'enveloppe correspondante, qui est positionnée diamétralement ou en diagonale opposée à l'aide à l'ouverture.

12. Conditionnement selon la revendication 11, **caractérisé en ce que**
une troisième force de pelage qui doit être appliquée pour retirer la couche d'enveloppe de la couche de couverture dans la région d'au moins une surface de maintien est supérieure à la première force de pelage.

13. Conditionnement selon l'une des revendications 7 à 12, **caractérisé en ce que**
la couche d'enveloppe est réalisée sous la forme d'un film rigide ou flexible et comprend des matériaux choisis dans le groupe constitué par les plastiques polymères tels que le polyéthylène téréphtalate (PET), le polyéthylène téréphtalate amorphe (APET), le polyhydroxyalcanoate, le polyméthacrylate de méthyle, le polypropylène (PP), le polystyrène (PS), chlorure de polyvinyle (PVC), polyéthylène (PE), par exemple polyéthylène haute densité (PE-HD ou HDPE), polyéthylène moyenne densité (PE-MD ou MDPE), polyéthylène basse densité (PE15 LD ou LDPE), éthylène-les copolymères d'alcool vinylique (EVOH) ; les polymères biodégradables, par exemple les biopolyesters, en particulier les polyesters thermoplastiques biodégradables, comme par exemple les acides polyhydroxycarboxyliques tels que l'acide polylactique (polylactide/PLA), l'amidon thermoplastique ou les acides gras polyhydroxylés (PHF) ; films laminés; feuilles métallisées; ou des mélanges des précédents.

14. Procédé de réalisation d'un agencement de couches selon l'une quelconque des revendications 1 à 6 ou de réalisation d'un conditionnement selon l'une quelconque des revendications 7 à 13.

15. Utilisation d'un agencement de couches selon l'une quelconque des revendications 1 à 6 pour la réalisation d'conditionnements pour un produit, notamment pour un aliment, tel que fromage, viande, volaille, poisson et produits de ceux-ci.
